# EUROPEAN PATENT APPLICATION

(11) **EP 2 070 580 A2**
(43) Date of publication of application: **17.06.2009**
(21) Application number: 08171176.4
(22) Date of filing: 10.12.2008
(51) Int. Cl.: B01D 53/94

(54) **Exhaust gas purification device**

(30) Priority: 13.12.2007 JP 2007322241
(71) Applicant: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: TBK-Patent

(57) **Abstract**

An exhaust gas purification device has an injector (3) and a wall-flow honeycomb support (5). The injector supplies fuel to the honeycomb support. The honeycomb support has a plurality of porous walls separating a plurality of inlet cells and a plurality of outlet cells. The exhaust gas flowing into the inlet cells flows through the porous walls into the outlet cells. Each porous wall has an upstream surface facing the inlet cell and a downstream surface facing the outlet cell. An upstream catalytic layer is formed on the upstream surface and a downstream catalytic layer is formed on the downstream surface. One of the upstream catalytic layer and the downstream catalytic layer is composed of a fuel reforming catalyst whose function is to reform the fuel to generate a reducing agent, and the other of the upstream catalytic layer and the downstream catalytic layer has a catalytic function which is different from the function of the fuel reforming catalyst.

## Description

### BACKGROUND OF THE INVENTION

The present invention relates to an exhaust gas purification device.

Japanese Unexamined Patent Publication No. 2006-291847 discloses an exhaust gas purification device for a diesel engine utilizing a diesel fuel reforming catalyst and a nitrogen oxide storage-reduction catalyst (hereinafter referred to as NSR catalyst). The diesel fuel reforming catalyst reforms light oil, or diesel fuel, to generate a reducing agent. The NSR catalyst reduces nitrogen oxides (hereinafter referred to as NOₓ) contained in exhaust gas into nitrogen (N₂). According to the reference, the diesel fuel reforming catalyst is connected to an exhaust passage, and the NSR catalyst is connected downstream of the diesel fuel reforming catalyst in the flow direction of the exhaust gas. An injector for injecting the diesel fuel is provided upstream of the diesel fuel reforming catalyst in the exhaust passage. The diesel fuel reforming catalyst reforms diesel fuel in such a manner that diesel fuel reacts with oxygen and water vapor in the exhaust gas over the diesel fuel reforming catalyst, thereby generating hydrogen. When the injector does not inject diesel fuel and the air-fuel ratio of the exhaust gas is lean, the NSR catalyst absorbs NOₓ in the exhaust gas. When the injector injects diesel fuel and the air-fuel ratio of the exhaust gas becomes rich, the NSR catalyst reduces the absorbed NOₓ into nitrogen, utilizing hydrogen as a reducing agent generated by the diesel fuel reforming catalyst.

However, the exhaust gas purification device in the above reference has a problem of increasing the size of the whole device, since the two catalysts, that is, the diesel fuel reforming catalyst and the NSR catalyst having respective functions are connected to the exhaust passage independently. The diesel fuel injected by the injector into the exhaust passage is delivered to the diesel fuel reforming catalyst in a mixed gaseous state of the exhaust gas and the diesel fuel. In the mixed gaseous state, the diesel fuel is distributed disuniformly, and is delivered disuniformly to the diesel fuel reforming catalyst, thereby causing another problem, such as deterioration of reaction efficiency of the diesel fuel reforming catalyst.

The present invention is directed to provide a downsized exhaust gas purification device in which reaction efficiency of fuel reforming catalyst is improved.

### SUMMARY OF THE INVENTION

In accordance with the present invention, an exhaust gas purification device has an injector and a wall-flow type honeycomb support. The injector supplies fuel to the honeycomb support. The honeycomb support has a plurality of porous walls separating a plurality of inlet cells and a plurality of outlet cells. The exhaust gas flowing into the inlet cells flows through the porous walls into the outlet cells. Each porous wall has an upstream surface facing the inlet cell and a downstream surface facing the outlet cell. An upstream catalytic layer is formed on the upstream surface and a downstream catalytic layer is formed on the downstream surface. One of the upstream catalytic layer and the downstream catalytic layer is composed of a fuel reforming catalyst whose function is to reform the fuel to generate a reducing agent, and the other of the upstream catalytic layer and the downstream catalytic layer has a catalytic function which is different from the function of the fuel reforming catalyst.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a schematic view showing an exhaust gas purification device according to a first preferred embodiment of the present invention;
Fig. 2 is a perspective view of the exhaust gas purification device according to the first preferred embodiment;
Fig. 3 is a cross-sectional side view of a honeycomb support according the first preferred embodiment;
Fig. 4 is a fragmentally enlarged cross-sectional side view of the honeycomb support according to the first preferred embodiment;
Fig. 5 is a fragmentally enlarged cross-sectional side view of the honeycomb support according to the first preferred embodiment;
Fig. 6 is a schematic view of an exhaust gas purification device according to a second preferred embodiment;
Fig. 7 is a fragmentally enlarged cross-sectional side view of a honeycomb support according to the second preferred embodiment; and
Fig. 8 is a fragmentally enlarged cross-sectional side view of the honeycomb support according to the second preferred embodiment.

### DETAILED DESCRIPTION OF THE PREFERRED EMBODIMENTS

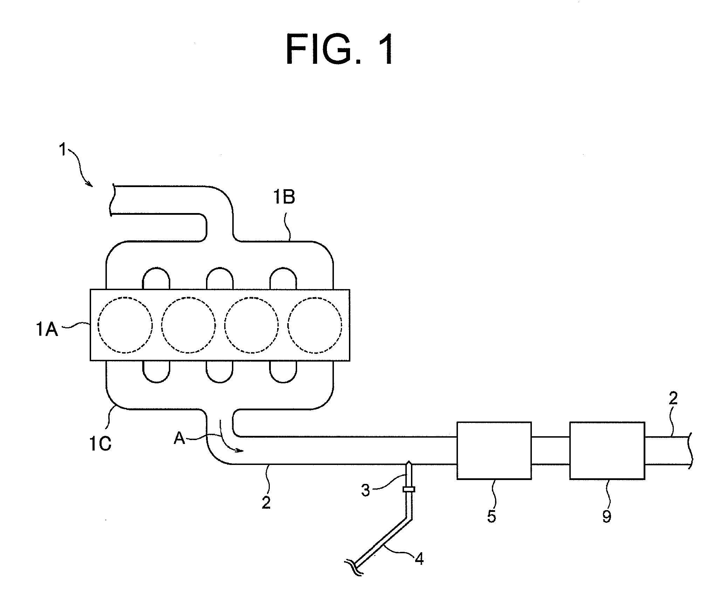

Fig. 1 shows an exhaust gas purification device of a first preferred embodiment according to the present invention. A diesel engine 1 has a cylinder head 1A to which an intake manifold 1 B and an exhaust manifold 1C are connected. The intake manifold 1 B introduces air into the diesel engine 1. The exhaust manifold 1C conducts exhaust gas outside the diesel engine 1. The exhaust manifold 1C is connected to an exhaust passage 2 so that exhaust gas from the diesel engine 1 flows in a direction indicated by an arrow A in Fig. 1. In the midway of the exhaust passage 2, an injector 3 is provided so as to bore through the wall of the exhaust passage 2 from the outside to the inside. The injector 3 is connected through a fuel passage 4 to a fuel tank which is not shown in the drawings. Diesel fuel as a fuel is stored in the fuel tank and is injected into the exhaust passage 2.

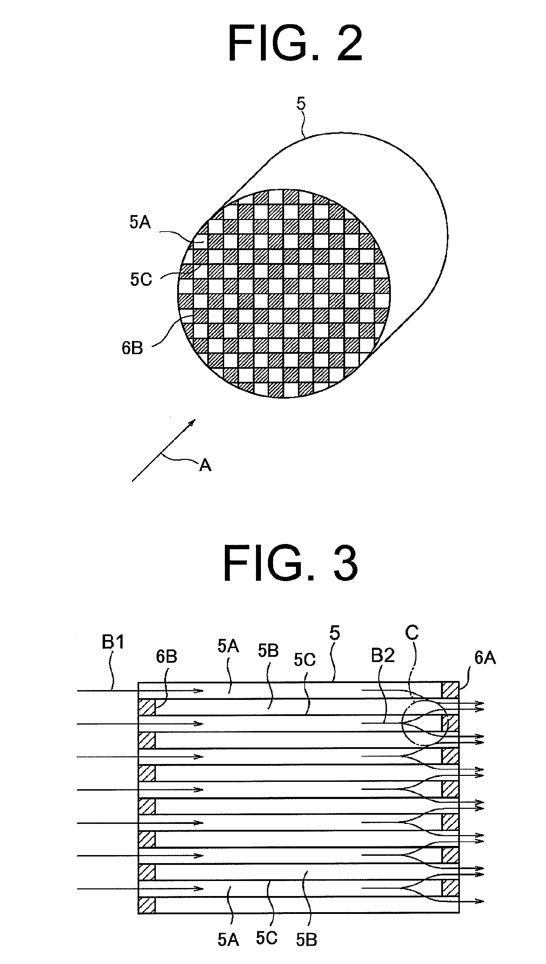

A honeycomb support 5 is connected downstream of the injector 3 in the direction indicated by the arrow A in Fig. 1. As shown in Fig. 2, the honeycomb support 5 is formed in a cylindrical shape and made of a porous ceramic material such as cordierite. The honeycomb support 5 has a plurality of rectangular cross-sectional cells. The cells extend through the honeycomb support 5 in the flow direction of the exhaust gas. One of each two adjacent cells is closed by a plug 6A (as shown in Fig. 3) inserted in the downstream end so as to form an inlet cell 5A. The other of the two adjacent cells, which is adjacent to the inlet cell 5A, is closed by a plug 6B inserted in the upstream end so as to form an outlet cell 5B. Porous walls 5C are formed to separate the inlet cells 5A and outlet cells 5B. In flowing through the honeycomb support 5, the exhaust gas flows into the inlet cells 5A, as indicated by arrows B1 in Fig. 3, and then into the outlet cells 5B through the porous walls 5C as indicated by arrows B2, to the outside of the honeycomb support 5.

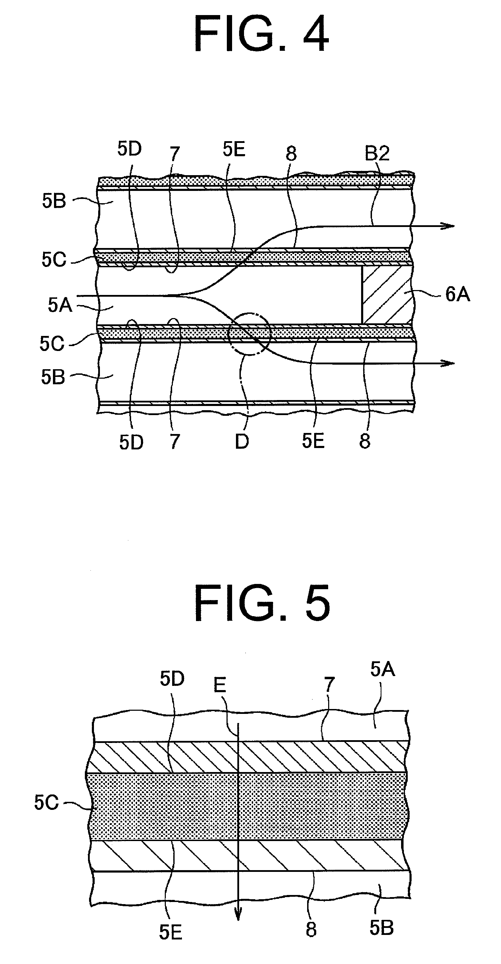

As shown in Fig. 4, each of the porous walls 5C separating the inlet cells 5A and the outlet cells 5B has an upstream surface 5D and a downstream surface 5E at the opposite side of the upstream surface 5D. The upstream surface 5D faces the inlet cell 5A. The downstream surface 5E faces the outlet cell 5B. An upstream catalytic layer 7 is formed on the upstream surface 5D. The upstream catalytic layer 7 is composed of a thin-layered fuel reforming catalyst. A downstream catalytic layer 8 is formed on the downstream surface 5E. The downstream catalytic layer 8 is composed of a thin-layered NSR catalyst. When exhaust gas passes through the honeycomb support 5, the exhaust gas flows through the upstream catalytic layer 7 on the upstream surface 5D, the porous wall 5C, and the downstream catalytic layer 8 on the downstream surface 5E, sequentially in this order, as indicated by an arrow E in Fig. 5.

The fuel reforming catalyst of the upstream catalytic layers 7 includes, for example, rhodium (Rh), alumina (Al₂O₃) and the like. The fuel reforming catalyst reforms diesel fuel by the reaction with oxygen (O₂) and water vapor (H₂O) in the exhaust gas. As a result, carbon monoxide (CO), hydrogen (H₂), and hydrocarbon (HC) are generated as reducing agents for the NSR catalyst of the downstream catalytic layers 8. The porous ceramic material for the porous walls 5C has greater flow resistance than the fuel reforming catalyst for the upstream catalytic layers 7. Therefore, the diesel fuel flowing in the inlet cells 5A to pass through the upstream catalytic layers 7 remains in the vicinity of the upstream catalytic layers 7, or, between the porous walls 5C and the upstream catalytic layers 7 for a long time. Part of diesel fuel does not react when flowing through the upstream catalytic layers 7. Such unburned diesel fuel and other components such as carbon monoxide, hydrogen, and hydrocarbon, which are generated by the upstream catalytic layers 7, pass through the porous walls 5C and reach the downstream catalytic layers 8 in an uniformly-distributed state in the exhaust gas. Further, the reducing agents such as carbon monoxide generated by the upstream catalytic layers 7 reach the downstream catalytic layers 8 immediately after flowing through the porous walls 5C. Therefore, the reaction between the reducing agents and components in the exhaust gas is suppressed, and the elimination of the reducing agents is suppressed to the minimum, accordingly.

The NSR catalyst of the downstream catalytic layers 8 includes alkaline-earth metal such as barium (Ba) and the like, as an absorbent. When the air-fuel ratio of the exhaust gas is lean, that is, when the exhaust gas is in an oxidizing atmosphere in which the air concentration is high, the NSR catalyst temporarily absorbs NOₓ contained in exhaust gas. When carbon monoxide, hydrogen, and hydrocarbon are supplied while the exhaust gas is in a rich state, that is, in the reducing atmosphere in which the air concentration is low, the NSR catalyst reduces absorbed NOₓ to nitrogen so as to generate ammonia (NH₃).

Referring back to Fig. 1, a selective catalytic reduction catalyst (hereinafter referred to as SCR catalyst) 9 is connected downstream of the honeycomb support 5. The SCR catalyst 9 reduces NOₓ contained in exhaust gas to nitrogen in such a manner that NOₓ contained in the exhaust gas reacts with ammonia generated by the NSR catalyst of the downstream catalytic layers 8.

Next, the operation of the exhaust gas purification device of the first preferred embodiment according to the present invention will be described. The following will describe the operation when the injector 3 does not inject diesel fuel yet, and the air-fuel ratio of the exhaust gas flowing into the honeycomb support 5 is in a lean state. As shown in Fig. 1, the exhaust gas discharged from the diesel engine 1 flows into the honeycomb support 5 through the exhaust manifold 1C and the exhaust passage 2. The exhaust gas in the honeycomb support 5 flows through the inlet cell 5A (as shown in Fig. 4), the upstream catalytic layer 7, the porous wall 5C, and the downstream catalytic layer 8, sequentially in this order, into the outlet cell 5B. Since the injector 3 does not inject diesel fuel, the fuel reforming catalyst of the upstream catalytic layer 7 does not react on the upstream surface 5D of the porous wall 5C.

The exhaust gas passing through the upstream catalytic layer 7 flows through the porous wall 5C to reach the downstream catalytic layer 8. Since the air-fuel ratio of the exhaust gas which reaches the downstream catalytic layer 8 is lean, the NSR catalyst of the downstream catalytic layer 8 on the downstream surface 5E of the porous wall 5C temporarily absorbs NOₓ contained in the exhaust gas. The exhaust gas flows through the downstream catalytic layer 8 into the outlet cell 5B, and is discharged to the outside of the honeycomb support 5. Then, the exhaust gas flows through the SCR catalyst 9. However, the SCR catalyst 9 does not react with the exhaust gas, since the NSR catalyst of the downstream catalytic layer 8 does not generate ammonia when the exhaust gas is in a lean state.

The following will explain the operation when the injector 3 injects diesel fuel, and the air-fuel ratio of the exhaust gas flowing into the honeycomb support 5 is in a rich state. When the injector 3 injects diesel fuel into the exhaust passage 2, the mixed gas of the exhaust gas and the diesel fuel flows through the porous wall 5C of the honeycomb support 5 (as shown in Fig.4). Diesel fuel is supplied to the fuel reforming catalyst of the upstream catalytic layer 7 on the upstream surface 5D of the porous wall 5C. The supplied diesel fuel reacts with oxygen and water vapor contained in the exhaust gas over the fuel reforming catalyst to generate carbon monoxide, hydrogen, and hydrocarbon as reducing agents for the NSR catalyst of the downstream catalytic layer 8. It is noted that the porous ceramic material of the porous wall 5C has greater flow resistance than the fuel reforming catalyst of the upstream catalytic layer 7. Therefore, the diesel fuel flowing through the upstream catalytic layer 7 remains for a long time between the upstream surface 5D of the porous wall 5C and the upstream catalytic layer 7, thereby improving the reaction efficiency of the fuel reforming catalyst.

The unburned diesel fuel which does not react in flowing through the upstream layer 7, carbon monoxide, hydrogen, and hydrocarbon generated by the upstream layer 7, pass through the porous wall 5C to reach the downstream layer 8. Such components are distributed uniformly in the exhaust gas while flowing through the porous wall 5C. Therefore, the components are supplied to all over the NSR catalyst of the downstream catalytic layers 8 to improve the reaction efficiency of the NSR catalyst. The reducing agents, such as carbon monoxide generated by the fuel reforming catalyst of the upstream catalytic layer 7, flow through the porous wall 5C to reach the downstream catalytic layer 8 immediately. The disappearance of the reducing agents by the reaction with other components in the exhaust gas is suppressed to the minimum. Therefore, the reaction efficiency in the NSR catalyst is further improved.

When the reducing agents generated by the upstream catalytic layer 7 and the exhaust gas in a rich state reach the downstream catalytic layer 8, the NSR catalyst of the downstream catalytic layer 8 reduces the absorbed NOₓ into nitrogen and generates ammonia. Nitrogen, which is reduced by the downstream catalytic layer 8, and ammonia, which is generated by the downstream catalytic layer 8, flow from the outlet cell 5B to the outside of the honeycomb support 5. Then nitrogen and ammonia flow through the SCR catalyst 9 connected to the downstream side. When NOₓ which is not reduced by the NSR catalyst remains in the exhaust gas, the SCR catalyst 9 reduces the residual NOₓ into nitrogen by reacting the residual NOₓ with ammonia generated by the NSR catalyst.

Thus, each of the porous walls 5C of the honeycomb support 5 has the upstream catalytic layer 7 on the upstream surface 5D and the downstream catalytic layer 8 on the downstream surface 5E. The upstream catalytic layers 7 are composed of the fuel reforming catalyst and the downstream catalytic layers 8 are composed of the NSR catalyst, thereby the single honeycomb support 5 has two different catalytic functions. Further, the honeycomb support 5 is of a wall flow type in which exhaust gas passes through the porous walls 5C. Therefore, diesel fuel remains between the upstream catalytic layers 7 and the porous walls 5C so as to extend the residence time of the diesel fuel in the vicinity of the fuel reforming catalyst of the upstream catalytic layers 7. The reaction efficiency of the fuel reforming catalyst is improved, accordingly. Further, unburned diesel fuel and reducing agents generated by the fuel reforming catalyst of the upstream catalytic layers 7 are distributed uniformly in flowing through the porous walls 5C, and are supplied uniformly to the NSR catalyst of the downstream catalytic layers 8. The reaction efficiency of the NSR catalyst is improved, accordingly. Therefore, the exhaust gas purification device is downsized, and the reaction efficiency of the fuel reforming catalyst is improved.

The upstream catalytic layers 7 are composed of the fuel reforming catalyst which reforms diesel fuel to generate reducing agents. The downstream catalytic layers 8 are composed of the NSR catalyst which reduces NOₓ contained in the exhaust gas into nitrogen by the reducing agents generated by the fuel reforming catalyst. The honeycomb support 5 has two different catalytic functions, accordingly. One of the functions is to generate reducing agents by reforming diesel fuel, and the other is to reduce NOₓ in exhaust gas into nitrogen. The reducing agents generated by the fuel reforming catalyst of the upstream catalytic layers 7 immediately reach the NSR catalyst of the downstream catalytic layers 8, without flowing through the exhaust passage 2. Therefore, the elimination of reducing agents by oxygen and the like in the exhaust gas is suppressed, and the reaction efficiency of the NSR catalyst is improved.

The following will describe an exhaust gas purification device according to a second preferred embodiment of the present invention. The exhaust gas purification device of the second embodiment differs from that of the first embodiment in that the upstream and downstream catalytic layers are composed of an oxidizing catalyst and a fuel reforming catalyst, respectively. Like or same parts or elements will be referred to by the same reference numerals as those in Figs. 1 though 5, and the description thereof will be omitted.

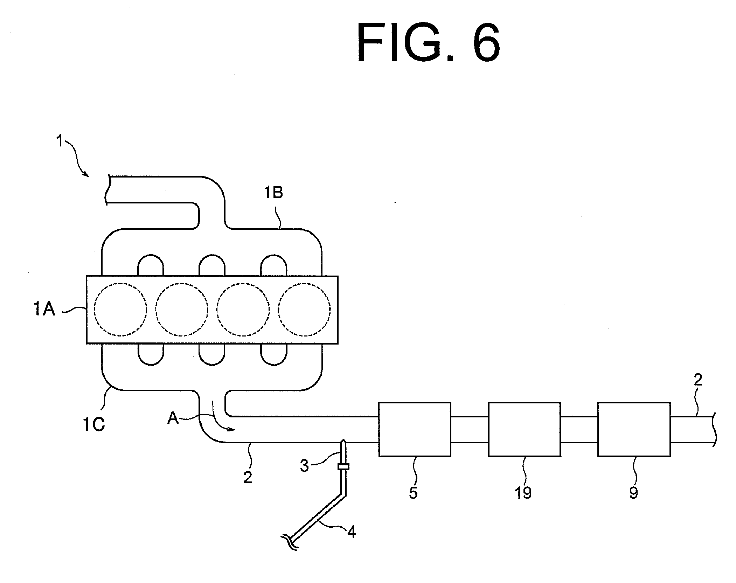

Fig. 6 shows the structure of the exhaust gas purification device of the second preferred embodiment. The honeycomb support 5 is connected at the downstream side of the injector 3 in the direction indicated by an arrow A of Fig. 6. At the downstream side of the honeycomb support 5, an NSR catalyst 19 and a SCR catalyst 9 are connected serially in this order. The NSR catalyst 19 is similar to that of the downstream catalytic layer 8 in the first embodiment.

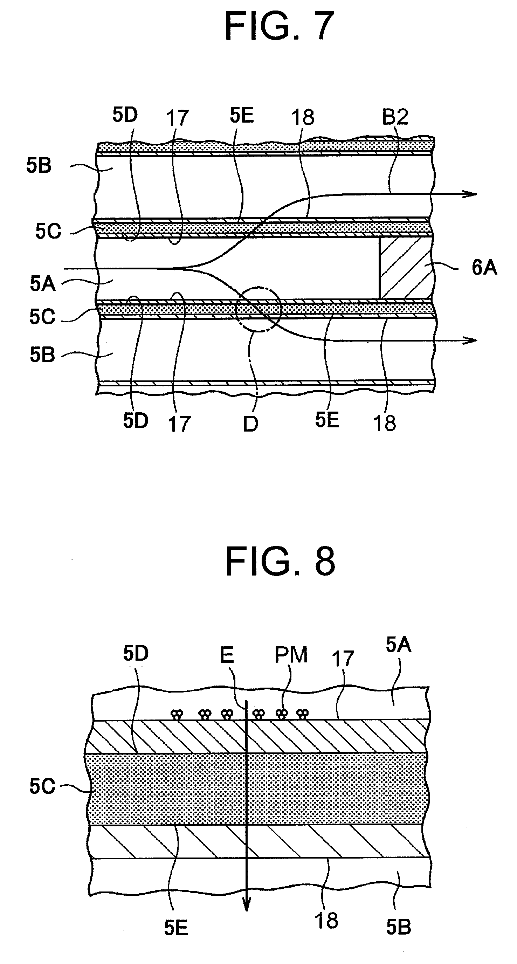

As shown in Fig. 7, upstream catalytic layers 17 composed of an oxidizing catalyst are formed on the upstream surfaces 5D of the porous walls 5C in the honeycomb support 5. Similarly, downstream catalytic layers 18 composed of a fuel reforming catalyst are formed on the downstream surfaces 5E. The oxidizing catalyst of the upstream catalytic layers 17 includes a precious metal such as platinum (Pt), palladium (Pd), and the like, and serves to oxidize and burn particulate matter (hereinafter referred to as PM) contained in exhaust gas. The honeycomb support 5 is of a wall flow type in which exhaust gas flows through the porous walls 5C. As shown in Fig. 8, PM contained in exhaust gas is collected by the upstream catalytic layer 17 when exhaust gas passes through the honeycomb support 5. The fuel reforming catalyst of the downstream catalytic layers 18 is similar to that of the upstream catalytic layers 7 in the first embodiment. When diesel fuel is supplied, carbon monoxide, hydrogen, hydrocarbon are generated as reducing agents for the NSR catalyst 19. Other structures are similar to those of the first embodiment.

The following will describe the operation of the exhaust gas purification device of the second preferred embodiment. Firstly, the operation of the exhaust gas purification device when the injector 3 does not inject diesel fuel yet will be described. As shown in Fig. 7, exhaust gas flowing into the honeycomb support 5 flows through the inlet cell 5A, the upstream catalytic layer 17, the porous wall 5C, and the downstream catalytic layer 18, serially in this order, into the outlet cell 5B. PM contained in exhaust gas is collected on the oxidizing catalyst of the upstream catalytic layer 17, as shown in Fig. 8, and is burned to be removed by the function of the oxidizing catalyst. The heat generated when PM is burned is transferred to the downstream catalytic layer 18 through the porous wall 5C so as to heat the fuel reforming catalyst of the downstream catalytic layer 18.

The exhaust gas from which PM is removed by the upstream catalytic layer 17 passes through the porous wall 5C and reaches the downstream catalytic layer 18. Since the injector 3 does not inject diesel fuel, the reaction over the fuel reforming catalyst of the downstream catalytic layer 18 does not occur. The exhaust gas passing through the downstream catalytic layer 18 is discharged to the outside of the honeycomb support 5, and passes through the NSR catalyst 19 connected downstream of the honeycomb support 5. Since the air-fuel ratio of the exhaust gas passing through the NSR catalyst 19 is in a lean state, the NSR catalyst 19 absorbs NOₓ temporarily, similar to that of the downstream catalytic layer 8 in the first embodiment. In case the air-fuel ratio of the exhaust gas is in a lean state, the NSR catalyst 19 does not generate ammonia, and the reaction over the SCR catalyst 9 does not occur.

Next will describe the operation of the exhaust gas purification device when the injector 3 injects diesel fuel. When the injector 3 injects diesel fuel into the exhaust passage 2, the mixed gas of exhaust gas and diesel fuel passes through the porous walls 5C of the honeycomb support 5. Part of diesel fuel in the mixed gas passes through the upstream catalytic layers 17 while not being burned, and reaches the downstream catalytic layers 18. The unburned diesel fuel reacts with oxygen and water vapor contained in the exhaust gas over the fuel reforming catalyst of the downstream catalytic layers 18 to generate carbon monoxide, hydrogen, and hydrocarbon as reducing agents for the NSR catalyst 19. The reaction is similar to that in the upstream catalytic layers 7 of the first embodiment.

In passing through the porous wall 5C, the unburned diesel fuel which reaches the downstream catalytic layers 18 is distributed uniformly in the whole exhaust gas. Therefore, the unburned diesel fuel is supplied uniformly to the entire fuel reforming catalyst of the downstream catalytic layers 18, thereby improving the reaction efficiency of the fuel reforming catalyst. Since the fuel reforming catalyst is heated by the heat generated when the oxidizing catalyst of the upstream catalytic layers 17 burns PM, the reaction efficiency of the fuel reforming catalyst is further improved. The exhaust gas in a rich state is discharged to the outside of the honeycomb support 5, and reaches the NSR catalyst 19. In this state, the exhaust gas includes diesel fuel which does not react over the fuel reforming catalyst of the downstream catalytic layers 18. The NSR catalyst 19 when the exhaust gas is in a rich state reacts similar to the NSR catalyst of the downstream catalytic layers 8 in the first embodiment.

Thus, in the porous walls 5C of the honeycomb support 5, the upstream catalytic layers 17 are composed of the oxidizing catalyst and the downstream catalytic layers 18 are composed of the fuel reforming catalyst. Therefore, the single honeycomb support 5 has two different catalytic functions, thereby downsizing the exhaust gas purification device, similar to the first embodiment. Further, the unburned diesel fuel which passes through the upstream catalytic layers 17 is in an uniformly-distributed state in the exhaust gas when passing through the porous walls 5C. The diesel fuel is supplied uniformly to the entire downstream catalytic layers 18, thereby improving the reaction efficiency in the fuel reforming catalyst of the downstream catalytic layers 18.

Further, the upstream catalytic layers 17 are composed of the oxidizing catalyst which burns PM. Therefore, the heat generated when PM is burned is transferred to the downstream catalytic layers 18 through the porous walls 5C so as to heat the fuel reforming catalyst of the downstream catalytic layers 18. Therefore, the reaction efficiency of the fuel reforming catalyst is further improved.

Therefore, the present examples and embodiments are to be considered as illustrative and not restrictive, and the invention is not to be limited to the details given herein but may be modified within the scope of the appended claims.

An exhaust gas purification device has an injector and a wall-flow type honeycomb support. The injector supplies fuel to the honeycomb support. The honeycomb support has a plurality of porous walls separating a plurality of inlet cells and a plurality of outlet cells. The exhaust gas flowing into the inlet cells flows through the porous walls into the outlet cells. Each porous wall has an upstream surface facing the inlet cell and a downstream surface facing the outlet cell. An upstream catalytic layer is formed on the upstream surface and a downstream catalytic layer is formed on the downstream surface. One of the upstream catalytic layer and the downstream catalytic layer is composed of a fuel reforming catalyst whose function is to reform the fuel to generate a reducing agent, and the other of the upstream catalytic layer and the downstream catalytic layer has a catalytic function which is different from the function of the fuel reforming catalyst.

## Claims

1. An exhaust gas purification device comprising:
an injector (3); and
a wall-flow type honeycomb support (5) to which the injector (3) supplies fuel, the honeycomb support (5) having a plurality of porous walls (5C) separating a plurality of inlet cells (5A) and a plurality of outlet cells (5B), wherein the exhaust gas flowing into the inlet cells (5A) flows through the porous walls (5C) into the outlet cells (5B), wherein each porous wall (5C) has an upstream surface (5D) facing the inlet cell (5A) and a downstream surface (5E) facing the outlet cell (5B),
**characterized in that:**
an upstream catalytic layer (7) is formed on the upstream surface (5D) and a downstream catalytic layer (8) is formed on the downstream surface (5E),
wherein one of the upstream catalytic layer (7) and the downstream catalytic layer (8) is composed of a fuel reforming catalyst whose function is to reform the fuel to generate a reducing agent, and the other of the upstream catalytic layer (7) and the downstream catalytic layer (8) has a catalytic function which is different from the function of the fuel reforming catalyst.

2. The exhaust gas purification device according to claim 1, **characterized in that** the upstream catalytic layer (7) is composed of the fuel reforming catalyst,
wherein the downstream catalytic layer (8) is composed of a nitrogen oxide storage-reduction catalyst reducing nitrogen oxide contained in the exhaust gas to generate nitrogen by the reducing agent which is generated by the fuel reforming catalyst.

3. The exhaust gas purification device according to claim 2, **characterized in that** a selective catalytic reduction catalyst (9) at downstream of the honeycomb support (5).

4. The exhaust gas purification device according to claim 1, **characterized in that** the upstream catalytic layer (7) is composed of an oxidizing catalyst burning particulate matter contained in the exhaust gas, wherein the downstream catalytic layer (8) is composed of the fuel reforming catalyst.

5. The exhaust gas purification device according to claim 4, **characterized in that** a selective catalytic reduction catalyst (9) at downstream of the honeycomb support (5).

6. The exhaust gas purification device according to any one of claims 1 through 5, **characterized in that** the fuel reforming catalyst is to reform diesel fuel to generate at least one of carbon monoxide, hydrogen or hydrocarbon as a reducing agent.
